# EUROPÄISCHE PATENTANMELDUNG

(11) **EP 2 455 562 A1**
(43) Veröffentlichungstag der Anmeldung: **23.05.2012**
(21) Anmeldenummer: 10191734.2
(22) Anmeldetag: 18.11.2010
(51) Int. Cl.: E04F 13/08, F16B 25/00, F16B 35/06, F16B 25/10

(54) **Schraube zum Befestigen eines Wärmedämmpaneels und Wärmedämmpaneelverkleidung**

(71) Anmelder: MAGE AG, 1791 Courtaman (CH)
(72) Erfinder: Sponer, Wolfgang, 1230 Wien (AT)
(74) Vertreter: Kohler Schmid Möbus

(57) **Zusammenfassung**

Vorgeschlagen wird eine Schraube (10) zum Befestigen eines Wärmedämmpaneels an einem Unterbau, mit einem Schraubenkopf (12), der gemeinsam mit einem Schraubenschaft (14) auf einer Längsachse (16) der Schraube (10) angeordnet ist, wobei der Schraubenschaft (14) mit einer radial über den Schraubenschaft (14) hervorstehenden Schneideinrichtung mit einer Schneidkante (34) versehen ist und einen in Richtung auf eine Schraubenspitze über die Schneideinrichtung axial hervorstehenden ersten Außengewindeabschnitt (20) aufweist. Bei der Schraube ist die Schneideinrichtung erfindungsgemäß durch einen sich entlang der Längsachse (16) der Schraube (10) erstreckenden und auf dieser angeordneten zylindrischen Stützkörper (18) gebildet. Der Stützkörper ist an seiner Mantelfläche (26) mit zumindest einer zu beiden Stirnflächen (30) des Stützkörpers (18) hin offen Nut (28) versehen, wobei eine Nutwand (32) der Nut (28) mit der dem Schraubenkopf (12) abgewandten Stirnfläche (30) des Stützkörpers (18) über eine Schneidkante (34) verbunden ist. Weiterhin wird eine Wärmedämmpaneelverkleidung mit einem an einem Unterbau mit mindestens einer erfindungsgemäßen Schraube (10) befestigten Wärmedämmpaneel vorgeschlagen.

## Beschreibung

Die Erfindung betrifft eine Schraube zum Befestigen eines Wärmedämmpaneels an einem Unterbau sowie ein Wärmedämmpaneelverkleidung mit einer solchen Schraube.

Die Schraube weist einen Schraubenkopf auf, der gemeinsam mit einem Schraubenschaft auf einer Längsachse der Schraube angeordnet ist. Der Schraubenschaft ist mit einer radial über den Schraubenschaft hervorstehenden Schneideinrichtung mit einer Schneidkante versehen und weist einen in Richtung auf eine Schraubenspitze über die Schneideinrichtung axial hervorstehenden ersten Außengewindeabschnitt auf.

Derartige Schrauben sind beispielsweise aus der DE 10 2006 036 979 B4 bekannt geworden und werden eingesetzt, um Wärmedämmpaneele an einer Unterlage zu befestigen, wie dies etwa im Rahmen einer auf einer Gebäudefassade anzubringenden Wärmedämmpaneelverkleidung (Vollwärmeschutz) üblich ist, um dadurch einen Durchgang von Wärmeenergie durch die Gebäudefassade zu reduzieren. Die Schrauben werden lediglich an geeigneter Stelle durch das Wärmedämmpaneel durchgeschraubt, bis sie in den Unterbau eingreifen und das Paneel an dem Unterbau sichern. Die Schraube bohrt sich beim Einschrauben in das Paneel ihren jeweils erforderlichen Bohrkanal selbst, wodurch ein Vorbohren des gesamten Wärmedämmpaneels zum Einbringen der Schraube entfällt.

Die Wärmedämmpaneele sollen mittels der Schrauben über einen Zeitraum von zum Teil mehreren Jahrzehnten an dem Unterbau, beispielsweise einer Gebäudefassade, gesichert werden. Die Befestigung soll dabei mechanischen Belastungen, wie sie beispielsweise bei entsprechenden Windlasten, aber auch mit Temperaturwechseln einhergehen, widerstehen und einer Verformung bzw. einer Lageänderung des Wärmedämmpaneels, beispielsweise aufgrund dessen Gewichts, entgegenwirken und insbesondere ein Ausreißen des Schraubenkopfes aus dem Wärmedämmpaneel verhindern.

Der Erfindung liegt die Aufgabe zugrunde, eine Schraube nach dem Oberbegriff des Patentanspruchs 1 bereitzustellen, welche eine nochmals stabilere und langlebigere Befestigung von Wärmedämmpaneelen an einem Unterbau erlaubt. Es ist zudem Aufgabe der Erfindung, eine Wärmedämmpaneelverkleidung mit einer solchen Schraube anzugeben. Die die Schraube betreffende Aufgabe wird durch eine Schraube mit den in Anspruch 1 angegebenen Merkmalen gelöst, die die Wärmedämmpaneelverkleidung betreffende Aufgabe mit einer Wärmedämmpaneelverkleidung mit den in Anspruch 14 angegebenen Merkmalen.

Bei der Schraube ist die Schneideinrichtung erfindungsgemäß durch einen sich entlang der Längsachse der Schraube erstreckenden und auf dieser angeordneten zylindrischen Stützkörper gebildet, der an seiner Mantelfläche mit zumindest einer zu beiden Stirnflächen des Stützkörpers hin offen Nut versehen ist, wobei eine Nutwand der Nut mit der dem Schraubenkopf abgewandten Stirnfläche des Stützkörpers über eine Schneidkante verbunden ist.

Der mit der erfindungsgemäßen Schraube verbundene Vorteil besteht im Wesentlichen darin, dass ein Wärmedämmpaneel an der montierten Schraube über den Stützkörper zusätzlich flächig abgestützt werden kann. So müssen die Gewichtskraft des Wärmedämmpaneels und andere an dem Wärmedämmpaneel angreifende Kräfte (Windlast) nicht lediglich über ein durch das Wärmedämmpaneel gebildetes kleines Widerlager im Bereich des Schraubenkopfes in die Schraube eingeleitet werden. Diese Kräfte können vielmehr über eine Mantelfläche des vollumfänglich von dem Wärmedämmpaneel umschlossenen Stützkörpers der Schraube gleichmäßig aufgenommen und in die in der Unterlage verankerte Schraube eingeleitet werden. Einem Aushebeln des Schraubenkopfes aus dem Wärmedämmpaneel wird dadurch effektiv entgegengewirkt und Lageänderungen des Wärmedämmpaneels gegenüber dem Unterbau bzw. Verformungen desselben vermieden. Dadurch kann weiterhin eine aus der Praxis bekannte und mit Lage- oder Formänderungen der Wärmedämmpaneele einhergehende Rissbildung in auf diesen aufgebrachten Putzsystemen verzögert bzw. insgesamt verringert werden. Das Stützelement erlaubt überdies in an und für sich bekannter Weise ein bei dem Eindrehen der Schraube selbststätiges Bohren eines dem Außendurchmesser des Stützelements im Wesentlichen entsprechenden Bohrkanals, so dass die Schraube auf einfache Weise in dem Wärmedämmpaneel abgesenkt und zu dessen Befestigung mit dem ersten Gewindeabschnitt in die Unterlage eingedreht werden kann, bis ein Materialabschnitt des Wärmedämmpaneels, beispielsweise eine der Unterlage zugewandte Innenschale, mit dem Stützkörper kraftschlüssig gegen den Unterbau gepresst wird.

Die erfindungsgemäße Schraube bietet weiterhin den Vorteil, dass ein mit der Schraube erzeugtes Bohrloch innerhalb des Wärmedämmpaneels zumindest längs eines vorgebbaren Längenabschnitts gegenüber einem Durchtritt von Wärmeenergie durch Konvektion oder auch in Form von Wärmestrahlung verschlossen werden kann. Der Stützkörper kann vor diesem Hintergrund aus einem Kunststoff mit einem geringen Wärmeleitwert, d.h. mit einem Wärmeleitwert λ von beispielsweise unter 1 W/(m·K), gebildet sein, so dass auch ein konduktiver Wärmeenergiedurchtritt im Bereich des Bohrlochs ohne einen weiteren Montageschritt weiter verringert werden kann. Der Schraubenkopf kann grundsätzlich alle am Markt üblichen Antriebe bzw. Antriebsprofile, wie beispielsweise ein (Innen-) Sechskant-Profil, ein Torq, Torx, oder auch ein Kreuzschlitzprofil, für ein dazu jeweilig korrespondierendes Drehwerkzeug aufweisen.

Nach einer bevorzugten Weiterbildung der Erfindung ist der Schraubenkopf mit dem Schraubenschaft einstückig ausgebildet, d.h. diese sind aus einem einzigen durchgängigen Bauteil gefertigt. Dadurch kann die Schraube auf kostengünstige Weise, beispielsweise im Kaltwalzverfahren, gefertigt werden.

Der Stützkörper ist vorzugsweise auf dem Schraubenschaft in Einschraubrichtung der Schraube drehfest und axial unverschiebbar angeordnet. Der Stützkörper kann diesbezüglich beispielsweise mit dem Schraubenschaft verschweißt oder verklebt sein, oder der Schraubenschaft ist im einfachsten Fall innerhalb des Stützkörpers im Presssitz gehalten. Der Stützkörper kann auch aus zwei Halbschalen bestehen, die unter gegenseitigem Verrasten auf den Schraubenschafts aufgeclipst sind und diesen formschlüssig umgreifen.

Eine im Hinblick auf die am Markt erhältlichen unterschiedlich dicken Wärmedämmpaneele besonders vorteilhafte Bauart der Schraube zeichnet sich dadurch aus, das der Stützkörper ein Innengewinde aufweist, das mit dem ersten und/oder einem zweiten Außengewindeabschnitt des Schraubenschafts im Eingriff steht. Dadurch können unterschiedlich konfigurierte Stützkörper, beispielsweise Stützkörper mit unterschiedlichem Außendurchmesser, an demselben Schraubenschaft oder auch einander entsprechende Stützkörper an unterschiedlichen Schraubenschäften eingesetzt, d.h. lediglich auf diesen aufgeschraubt, werden. Diese modulare Bauweise ermöglicht ein besonders breites Einsatzspektrum der Schraube und ist nicht zuletzt auch im Hinblick auf Lagerhaltungskosten von Vorteil.

Der zweite Außengewindeabschnitt des Schraubenschafts unterscheidet sich vorzugsweise von dem ersten Außengewindeabschnitt. Durch einen entsprechend groß gewählten Nenndurchmesser und/oder eine entsprechend gewählte Steigung eines Gewindes des zweiten Außengewindeabschnitts kann eine besonders stabile und spielfreie Lagerung des, insbesondere aus einem Kunststoff gefertigten, Stützkörpers auf dem Schraubenschaft erreicht werden. Entsprechend kann das Gewinde des ersten Gewindeabschnitts auf die jeweilige Unterlage ausgerichtete Charakteristik aufweisen.

Ein besonders bevorzugtes Ausführungsbeispiel zeichnet sich dadurch aus, dass der Stützkörper in axialer Richtung direkt oder auch mittelbar an dem Schraubenkopf abgestützt ist. Dadurch ist der Stützkörper auf denkbar einfache Weise gegenüber einem axialen Entfernen von dem Stützkörper, sei es beim Eindrehen der Schraube in das Wärmedämmpaneel oder auch in der Zeit danach, wirkungsvoll gesichert. Darüber hinaus kann der Stützkörper im Sinne eines Schraubenkopfes mit seiner der Schraubenspitze zugewandten Stirnfläche unmittelbar zur kraftschlüssigen Befestigung, d.h. hier zum Anpressen eines Materialabschnitts, wie etwa einer Innenschale des Wärmedämmpaneels gegen den Unterbau eingesetzt werden.

Dem Stützkörper und dem Schraubenkopf ist vorzugsweise ein elastisches Element und/oder eine Stützring zwischengeschaltet. Dadurch können die beim Eindrehen der Schraube auftretenden Anlagekräfte des Schraubenkopfes gegen den Stützkörper gleichmäßiger, d.h. flächiger in den Stützkörper eingeleitet werden, wodurch dessen Beschädigung beim Eindrehen der Schraube in den Unterbau (Verspannen) bzw. in seiner Montageposition entgegengewirkt wird.

Der Schraubenkopf und/oder der Schraubenschaft kann in fertigungstechnisch vorteilhafter Weise durch den Stützkörper selbst ausgebildet, insbesondere diesem angeformt sein.

Im Hinblick auf das Abführen von mit der Schneidkante abgehobenen Spänen beim Einschrauben bzw. Einbohren (Absenken) der Schraube in das Wärmedämmpaneel hat es sich als vorteilhaft erwiesen, wenn die Nut des Stützkörpers wendelförmig um den Stützkörper herum verläuft.

Die für das Einbringen der Schraube in das Wärmedämmpaneel erforderliche Zeit kann beispielsweise dadurch weiter verkürzt werden, dass der Stützkörper an seiner Mantelfläche mehrere Nuten aufweist. So kann der Stützkörper beispielsweise mit 2, 3, 4 oder auch mehr Nuten versehen sein. Die Anzahl der Nuten wird vorzugsweise in Abhängigkeit von der Beschaffenheit des spanend abgehobenen Materials bzw. dem Materialaufbau des Wärmedämmpaneels gewählt.

Die Länge des Stützkörpers ist insbesondere auf eine Dicke des jeweilig zu befestigenden Wärmedämmpaneels ausgerichtet, insbesondere kürzer als dieses. Dadurch können je nach Wärmeleitwert des Stützkörpers Kältebrücken verringert bzw. vermieden werden. Zugleich kann eine auf den jeweiligen Bedarf ausgerichtete Abstützung des Wärmedämmpaneels an dem Stützkörper bereitgestellt werden.

Zwecks eines besonders einfachen Eindrehens der Schraube in den jeweiligen Unterbau weist der Schraubenschaft eine Bohrspitze auf. Dadurch entfällt in der Praxis ein zeitraubendes durchgängiges Vorbohren des Wärmedämmpaneels zur Bildung eines zur Aufnahme der Schraube vorgesehenen Bohrlochs ebenso, wie die Verwendung einer entsprechenden Bohrschablone, was die Handhabung insgesamt erleichtert und unnötige Kosten zu vermieden hilft, In diesem Zusammenhang ist es zudem besonders bevorzugt, dass der erste Außengewindeabschnitt des Schraubenschafts ein selbstschneidendes Gewinde aufweist.

Der Stützkörper ist nach der Erfindung vorzugsweise aus einem Kunststoff gebildet. Neben den sich daraus ergebenden einfachen Fertigung, beispielsweise im Spritzgussverfahren, weisen viele Kunststoffe von Hause aus, d.h. inhärent, eine gegenüber Metallen ausgesprochen niedrigen Wärmeleitwert auf. Der Wärmedurchgang kann bei Kunststoffen zudem beispielsweise durch das Einbringen von Gas- bzw. Lufteinschlüssen weiter verringert werden, ohne dadurch die mechanische Belastbarkeit in einem für die Praxis relevanten Umfang zu verringern. Weiterhin bieten Kunststoffe (nicht zuletzt aufgrund ihrer mittels geeigneter Zuschlagstoffe in weiten Bereichen einstellbaren Materialeigenschaften) Vorteile im Hinblick auf Korrosionsschäden und damit einhergehende optisch wenig attraktive Verfärbungen, etwa an einem auf dem Wärmedämmpaneel aufgebrachten Putzsystem.

In der Zeichnung wird die Erfindung anhand von Ausführungsbeispielen näher erläutert.

In der Zeichnung zeigen:
- Fig. 1: eine erfindungsgemäße Schraube zum Befestigen eines Wärmedämmpaneels, die einen auf dem Schraubenschaft angeordneten Stützkörper aufweist, in Seitenansicht;
- Fig. 2: die Schraube gemäß Fig, 1 in einer stirnseitigen Ansicht auf die Schraubenspitze;
- Fig. 3: die Schraube gemäß Fig. 1 nach einem Entfernen des Stützkörpers;
- Fig. 4: ein weiteres Ausführungsbeispiel der erfindungsgemäßen Schraube; und

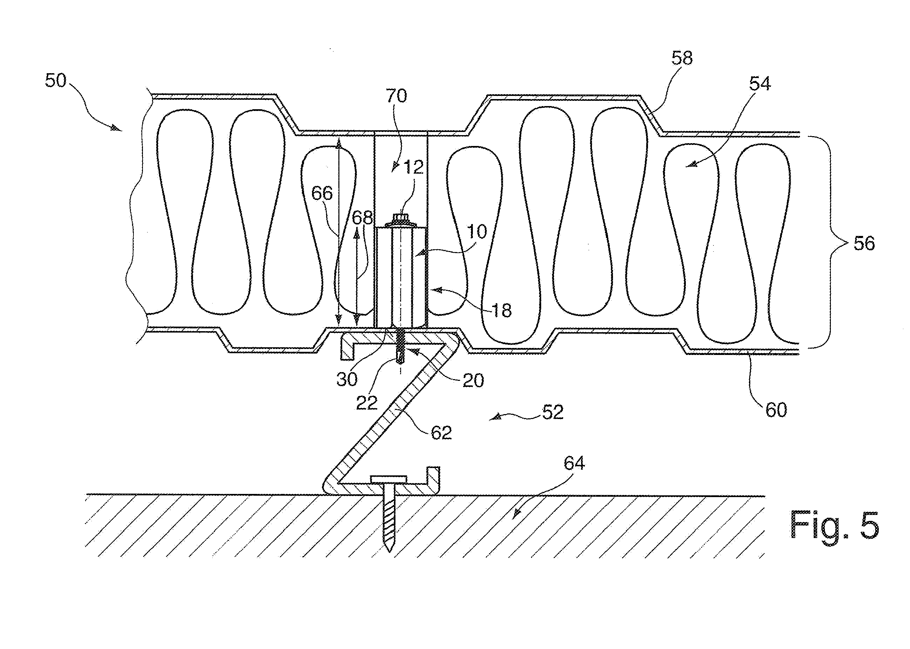

- Fig. 5: eine Wärmedämmpaneelverkleidung mit einem an einer Unterlage mit einer erfindungsgemäßen Schraube befestigten Wärmedämmpaneel, im Querschnitt.

Die Figuren der Zeichnung zeigen den erfindungsgemäßen Gegenstand stark schematisiert und sind nicht maßstäblich zu verstehen. Die einzelnen Bestandteile des erfindungsgemäßen Gegenstands sind so dargestellt, dass ihr Aufbau gut gezeigt werden kann.

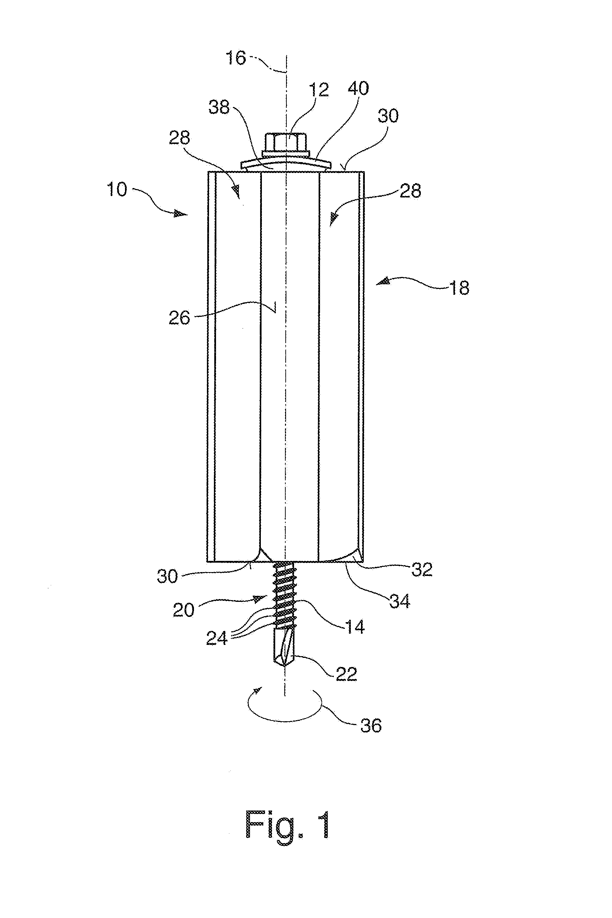

In der Fig. 1 ist eine insgesamt mit **10** bezeichnete erfindungsgemäße Schraube zum Befestigen eines Wärmedämmpaneels an einem Unterbau gezeigt. Die Schraube weist einen Schraubenkopf **12** und einen Schraubenschaft **14** auf, die gemeinsam auf einer Längsachse **16** der Schraube 10 angeordnet sind. Der Schraubenkopf 12 ist mit dem Schraubenschaft 14 vorliegend einstückig ausgebildet, d.h. diese sind als ein einziges (durchgängiges) Bauteil ausgeführt.

Der Schraubenschaft 14 weist einen radial über den Schraubenschaft 14 hervorstehenden und sich entlang der Längsachse 16 der Schraube 10 erstreckenden zylindrischen Stützkörper **18** auf, über den der Schraubenschaft 14 mit einem ersten Außengewindeabschnitt **20** axial in Richtung auf eine vorliegend als Bohrspitze **22** ausgebildete Schraubenspitze axial hervorsteht. Die Bohrspitze 22 erlaubt bei einem Eindrehen der Schraube 10 in ein Wärmedämmpaneel ein selbsttätiges Durchbohren des ggf. kaschierten Wärmedämmpaneels, d.h. beispielsweise einer dem Unterbau zugewandten Innenschale des Wärmedämmpaneels, sowie ein selbsttätiges Einbohren der Schraube 10 in den Unterbau, wodurch eine Montage der Schraube 10 insgesamt vereinfacht wird. Der erste Außengewindeabschnitt 20 des Schraubenschafts 14 weist diesbezüglich ein selbstschneidendes Gewinde **24** auf.

Der Stützkörper 18 ist zum Abführen von Spänen des Wärmedämmpaneels an seiner Mantelfläche **26** mit insgesamt vier Nuten **28** versehen, die parallel zur Längsachse 16 der Schraube 10 und um diese herum jeweils voneinander beabstandet angeordnet sind. Die Nuten 28 sind jeweils zu beiden Stirnflächen **30** des Stützkörpers 18 hin offen, wobei die Nuten 28 jeweils eine angefaste Nutwand **32** aufweisen, die mit der bohrspitzenseitigen Stirnfläche 30 über eine Schneidkante **34** verbunden ist. Die angefaste Nutwand 32 dient dem erleichterten Zuführen von Spänen an die jeweiligen Nuten 28, über die beim Eindrehen der Schraube 10 in ein Wärmedämmpaneel abgehobene Späne in Richtung auf den Schraubenkopf 12 abgeführt werden können.

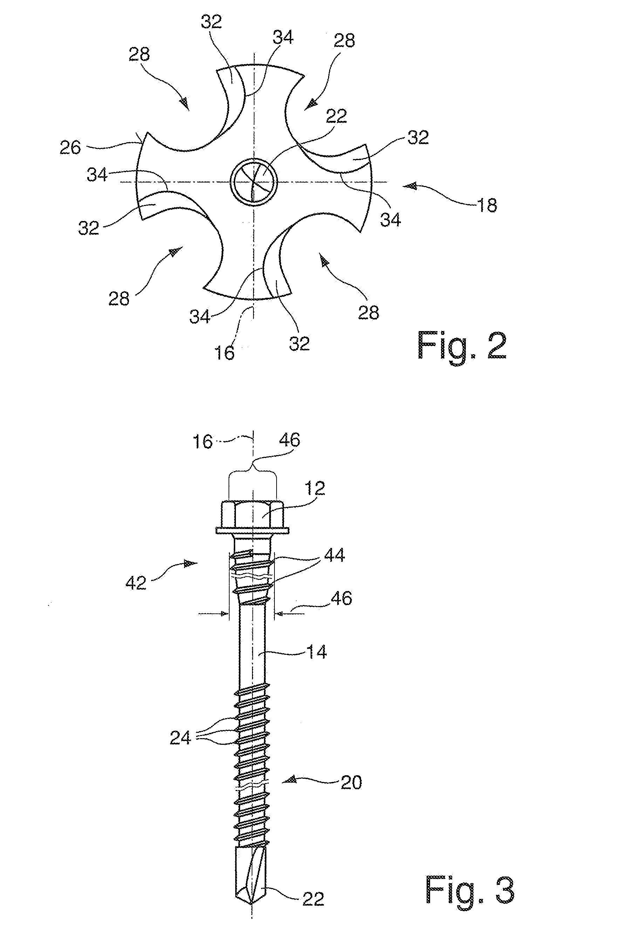

Der Stützkörper 18 ist auf dem Schraubenschaft 14 in Einschraubrichtung **36** der Schraube 10 drehfest und axial unverschiebbar angeordnet. Der Stützkörper 18 weist diesbezüglich ein in der Fig. nicht näher wiedergegebenes Innengewinde auf, das mit einem in der Fig. 3 näher gezeigten zweiten Außengewinde eines zweiten Außengewindeabschnitts des Schraubenschafts 14 im Eingriff steht. Der Stützkörper 18 ist somit im Sinne einer Gewindemuffe auf den Schraubenschaft 14 aufgeschraubt und vorliegend in axialer Richtung über ein ringförmiges elastisches Element **38** und einen dem Schraubenkopf 12 unmittelbar anliegenden Stützring **40** in Form einer Unterlagscheibe an dem Schraubenkopf 12 abgestützt und damit gegenüber einem axialen Entfernen von dem Schraubenschaft in Richtung des Schraubenkopfes 14 gesichert.

Der Stützkörper 18 ist aus einem hochdichten Kunststoff gefertigt, kann aber beispielsweise auch aus einem faserverstärktem Nylon oder einem anderen Kunststoff bzw. Kunststoffverbund mit vorbestimmten Material- bzw. Wärmedämmeigenschaften gebildet sein.

In der Fig. 2 ist die in der Fig. 1 wiedergegebene Schraube 10 in einer stirnseitigen Draufsicht auf die Bohrspitze 22 näher wiedergegeben. Gut zu erkennen sind hier die jeweils angefasten Nutwände 32, die mit der der Bohrspitze 22 zugewandten Stirnfläche 30 des zylindrischen Stützkörpers 18 jeweils die vorstehend erläuterten Schneidkanten 34 bilden.

In der Fig. 3 ist die erfindungsgemäße Schraube 10 nach einem Entfernen des Stützkörpers 18 (Fign, 1 und 2) von dem Schraubenschaft 14 wiedergegeben. Bei dieser Darstellung ist der für die Befestigung des Stützkörpers 18 an dem Schraubenschaft 14 vorgesehene zweite Außengewindeabschnitt **42** des Schraubenschafts gut zu erkennen, dessen Gewinde **44** eine im Vergleich zu dem Gewinde 24 des ersten Außengewindeabschnitts 20 identischen Flankenwinkel aufweist und wie dieses als rechtsgängiges Gewinde 42 ausgebildet ist. Das Gewinde 44 des zweiten Außengewindeabschnitts 42 weist eine im Vergleich zu dem Gewinde 24 des ersten Außengewindeabschnitts 20 geringere Steigung sowie einen größeren Nenndurchmesser **46** auf.

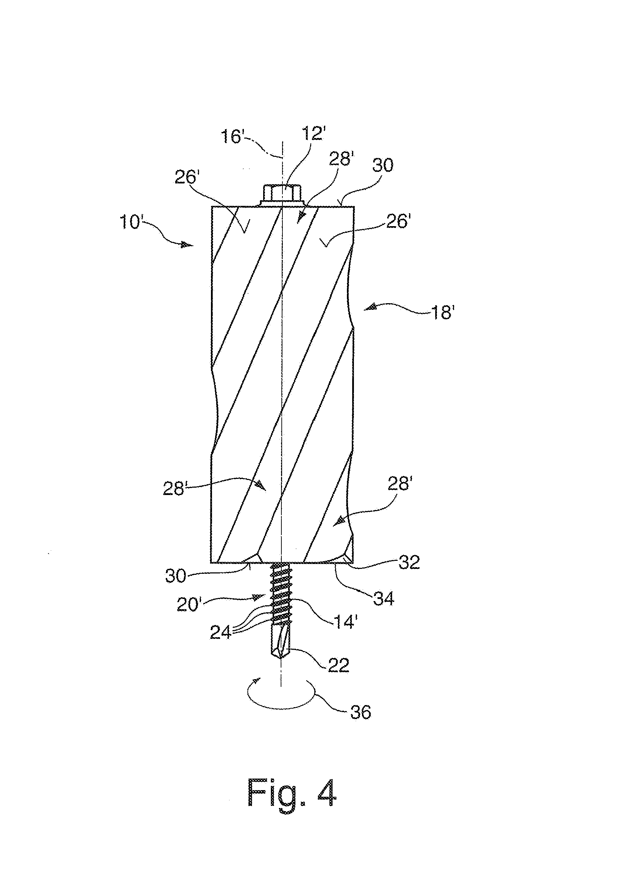

In der Fig. 4 ist ein weiteres Ausführungsbeispiel der erfindungsgemäßen Schraube 10' gezeigt, das sich von dem im Zusammenhang mit den Fig. 1 bis 3 erläuterten Ausführungsbeispiel im Wesentlichen darin unterscheidet, dass der als Außensechskant ausgeführte Schraubenkopf 12' durch den Stützkörper 18'selbst gebildet, d.h. diesem angeformt ist. Der Schraubenschaft 14'ist bei diesem Ausführungsbeispiel zudem insgesamt kürzer ausgebildet und erstreckt sich axial nur durch einen Teillängenabschnitt des Stützkörpers 18'. Der Schraubenschaft 14' weist nur einen (ersten) Gewindeabschnitt 20' auf und ist mit diesem teilweise in den Stützkörper 18' eingeschraubt. Die Nuten 28' in der Mantelfläche 26'des Stützkörpers 18' verlaufen fortlaufend wendelförmig in einer Schraubenlinie um den Stützkörper 18' und damit die Längsachse 16'der Schraube 10'herum.

In der Fig. 4 ist eine Wärmedämmpaneelverkleidung **50** mit einer Mehrzahl von mittels in den Fig. 1-3 erläuterten erfindungsgemäßen Schrauben 10 an einem Unterbau **52** befestigten Wärmedämmpaneelen **54** gezeigt, von denen vorliegend aus Darstellungsgründen nur eines näher wiedergegeben ist.

Das Wärmedämmpaneel 54 ist vorliegend als Sandwichelement ausgeführt und besteht aus einer, beispielsweise aus einem Schaumstoff gebildeten, Isolierstoffschicht **56,** die zwischen einer trapezförmigen Außenschale **58** und einer trapezförmigen Innenschale **60** angeordnet und jeweils mit diesen flächig verklebt ist.

Der Unterbau 52 ist im vorliegenden Ausführungsbeispiel durch eine Mehrzahl von im Querschnitt Z-förmig profilierten Trägern **62** aus Kunststoff gebildet, von denen in der Fig. aus Darstellungsgründen nur ein einzelner Träger 62 wiedergegeben ist. Der bzw. die Träger 62 sind ihrerseits jeweils an einer Gebäudefassade **64** festgeschraubt.

Die erfindungsgemäße Schraube 10 ist durch das Wärmedämmpaneel 54 derart hindurch geschraubt, dass der durch die fassadennahe Stirnfläche 30 des Stützkörpers 18 gebildete Anschlag der Schraube 10 ein Widerlager der Innenschale 60 des Wärmedämmelements bildet. Die Schraube 10 bzw. der Stützkörper 18 sind in ihrer Länge jeweils so bemessen, das die Schraube 10 einerseits mit einem ausreichenden Längenabschnitt ihres ersten Außengewindeabschnitts 20 in den Träger 62 eingreift und so in diesem verankert ist. Andererseits weist der Stützkörper 18 eine auf die Dicke **66** des Wärmedämmpaneels 54 im Bereich des Bohrkanals ausgerichtete Länge **68** auf, die vorzugsweise zumindest einem Drittel, besonders bevorzugt der Hälfte der Dicke 66 des Wärmedämmpaneels 54 entspricht, immer aber kleiner als dessen Dicke 66 ist. Dadurch wird der Bohrkanal **70** innerhalb des Wärmedämmpaneels 54 durch den Stützkörper 18 zumindest abschnittsweise ausgefüllt, so dass einem Durchgang von Wärmeenergie entgegengewirkt und eine besonders stabile Befestigung und Abstützung des Wärmedämmpaneels 54 auf dem Unterbau 52 gewährleistet ist.

Zwecks Befestigung des Wärmedämmpaneels 54 an dem Unterbau 52 wurde in die vorliegend sehr harte und zähe Außenschale 58 zunächst an einer vorbestimmten Stelle ein Bohrloch eingebracht. Dies kann vor Ort, aber auch bereits werksseitig bei der Fertigung des Wärmedämmpaneels 54 erfolgen.

Die Schraube 10 wurde nachfolgend durch das Bohrloch der Außenschale 58 des Wärmedämmpaneels 54 gesteckt und unter einer Drehbewegung durch das Wärmedämmpaneel bzw. die Isolierstoffschicht 56 unter Ausbildung nicht näher wiedergegebener spiralförmiger Isolierstoffspäne durchgeschraubt, die aus Isolationsgründen vorteilhafterweise im Bohrkanal 70 oberhalb des Schraubenkopfes 12 verbleiben.

Bei Kontakt der Bohrspitze 22 mit der Innenschale 60 des Wärmedämmelements und nachfolgend mit dem Träger 62 wurden diese von der Bohrspitze 22 durchbohrt und die Schraube in einen so geformten und in der Fig. nicht näher wiedergegebenen Bohrkanal des Trägers 62 eingeschraubt.

Vorgeschlagen wird eine Schraube (10) zum Befestigen eines Wärmedämmpaneels (54) an einem Unterbau (52), mit einem Schraubenkopf (12), der gemeinsam mit einem Schraubenschaft (14) auf einer Längsachse (16) der Schraube (10) angeordnet ist, wobei der Schraubenschaft (14) mit einer radial über den Schraubenschaft (14) hervorstehenden Schneideinrichtung mit einer Schneidkante (34) versehen ist und einen in Richtung auf eine Schraubenspitze über die Schneideinrichtung axial hervorstehenden ersten Außengewindeabschnitt (20) aufweist. Bei der Schraube ist die Schneideinrichtung erfindungsgemäß durch einen sich entlang der Längsachse (16) der Schraube (10) erstreckenden und auf dieser angeordneten zylindrischen Stützkörper (18) gebildet. Der Stützkörper ist an seiner Mantelfläche (26) mit zumindest einer zu beiden Stirnflächen (30) des Stützkörpers (18) hin offen Nut (28) versehen, wobei eine Nutwand (32) der Nut (28) mit der dem Schraubenkopf (12) abgewandten Stirnfläche (30) des Stützkörpers (18) über eine Schneidkante (34) verbunden ist. Weiterhin wird eine Wärmedämmpaneelverkleidung mit einem an einem Unterbau mit mindestens einer erfindungsgemäßen Schraube (10; 10') befestigten Wärmedämmpaneel vorgeschlagen. Die Schraube (10; 10') ist derart durch das Wärmedämmpaneel durchgeschraubt , dass die dem Unterbau zugewandte Stirnfläche (30) des Stützkörpers (18) ein Widerlager des Unterbaus bildet und das Wärmedämmpaneel zusätzlich an dem sich längs eines durch die Schraube (10; 10') gebildeten Bohrkanals innerhalb des Wärmedämmpaneels erstreckenden Stützkörper (18) der Schraube (10) abgestützt ist.

## Patentansprüche

1. Schraube (10; 10') zum Befestigen eines Wärmedämmpaneels (54) an einem Unterbau (52), mit einem Schraubenkopf (12; 12'), der gemeinsam mit einem Schraubenschaft (14; 14') auf einer Längsachse (16; 16') der Schraube (10; 10') angeordnet ist, wobei der Schraubenschaft (14; 14') mit einer radial über den Schraubenschaft (14; 14') hervorstehenden Schneideinrichtung mit einer Schneidkante (34) versehen ist und einen in Richtung auf eine Schraubenspitze über die Schneideinrichtung axial hervorstehenden ersten Außengewindeabschnitt (20) aufweist,
**dadurch gekennzeichnet, dass**
die Schneideinrichtung durch einen sich entlang der Längsachse (16) der Schraube (10) erstreckenden und auf dieser angeordneten zylindrischen Stützkörper (18) gebildet ist, der an seiner Mantelfläche (26) mit zumindest einer zu beiden Stirnflächen (30) des Stützkörpers (18) hin offen Nut (28) versehen ist, wobei eine Nutwand (32) der Nut (28) mit der dem Schraubenkopf (12) abgewandten Stirnfläche (30) des Stützkörpers (18) über eine Schneidkante (34) verbunden ist.

2. Schraube nach Anspruch 1, **dadurch gekennzeichnet, dass** der Schraubenkopf (12) mit dem Schraubenschaft (14) einstückig ausgebildet ist oder das der Schraubenkopf (12) durch den Stützkörper (18) gebildet, insbesondere diesem angeformt, ist.

3. Schraube nach Anspruch 1 oder 2, **dadurch gekennzeichnet, dass** der Stützkörper (18) auf dem Schraubenschaft (14) in Einschraubrichtung (36) der Schraube drehfest und axial unverschiebbar angeordnet ist.

4. Schraube nach einem der vorhergehenden Ansprüche, **dadurch gekennzeichnet, dass** der Stützkörper (18) in axialer Richtung an dem Schraubenkopf (12; 12') abgestützt ist.

5. Schraube nach einem der vorhergehenden Ansprüche, **dadurch gekennzeichnet, dass** der Stützkörper (18; 18') mit dem ersten und/oder einem zweiten Außengewindeabschnitt (20; 20', 42) des Schraubenschafts (14; 14') im Eingriff steht.

6. Schraube nach Anspruch 5, **dadurch gekennzeichnet, dass** der zweite Außengewindeabschnitt (42) des Schraubenschafts (14; 14') sich von dem ersten Außengewindeabschnitt (20; 20'), insbesondere in seiner Steigung und/oder seinem Nenndurchmesser (46), unterscheidet und von diesem axial beabstandet angeordnet ist.

7. Schraube nach einem der vorhergehenden Ansprüche, **dadurch gekennzeichnet, dass** die Nut (28; 28') des Stützkörpers (18; 18') wendelförmig um den Stützkörper (18; 18') herum verläuft.

8. Schraube nach einem der vorhergehenden Ansprüche, **dadurch gekennzeichnet, dass** der Stützkörper (18; 18') an seiner Mantelfläche (26; 26') mehrere Nuten (28; 28') aufweist.

9. Schraube nach einem der vorhergehenden Ansprüche, **dadurch gekennzeichnet, dass** dem Stützkörper (18; 18) und dem Schraubenkopf (12'; 12') ein elastisches Element (38) und/oder ein Stützring (40) zwischengeschaltet ist.

10. Schraube nach einem der vorhergehenden Ansprüche, **dadurch gekennzeichnet, dass** die Länge (68) des Stützkörpers (18; 18') auf eine Dicke (66) des jeweilig zu befestigenden Wärmedämmpaneels (54) ausgerichtet, insbesondere kürzer als diese ist und bevorzugt zumindest einem Drittel, ganz besonders bevorzugt einer Hälfte der Dicke (66) des Wärmedämmpaneels (54) entspricht.

11. Schraube nach einem der vorhergehenden Ansprüche, **dadurch gekennzeichnet, dass** die Schraubenspitze als Bohrspitze (22) ausgebildet ist.

12. Schraube nach einem der vorhergehenden Ansprüche, **dadurch gekennzeichnet, dass** der erste Außengewindeabschnitt (20; 20') und/oder der zweite Außengewindeabschnitt (42) des Schraubenschafts (14; 14') ein selbstschneidendes Gewinde (24; 44) aufweist.

13. Schraube nach einem der vorhergehenden Ansprüche, **dadurch gekennzeichnet, dass** der Stützkörper (18; 18') aus einem Kunststoff mit einem vorzugsweise niederen Wärmeleitwert gefertigt ist.

14. Wärmedämmpaneelverkleidung (50) mit einem an einem Unterbau (52) mit mindestens einer Schraube (10; 10') befestigten Wärmedämmpaneel (54), **dadurch gekennzeichnet, dass** die Schraube (10; 10') nach einem der Ansprüche 1 bis 13 ausgebildet ist und dass die Schraube (10; 10') derart durch das Wärmedämmpaneel (54) durchgeschraubt ist, dass die dem Unterbau (52) zugewandte Stirnfläche (30) des Stützkörpers (18, 18') ein Widerlager des Unterbaus (52) bildet und dass das Wärmedämmpaneel (54) zusätzlich an dem Stützkörper (18; 18') der Schraube (10; 10') abgestützt ist.
